# EUROPEAN PATENT APPLICATION

(11) **EP 4 769 760 A1**
(43) Date of publication of application: **01.07.2026**
(21) Application number: 25837736.5
(22) Date of filing: 09.07.2025
(51) Int. Cl.: H01M 50/358, H01M 50/342, H01M 50/30, H01M 50/383, H01M 50/271, H01M 50/249

(54) **BATTERY MODULE, AND BATTERY PACK AND VEHICLE COMPRISING SAME**

(30) Priority: 10.07.2024 KR 20240090895
(71) Applicant: LG ENERGY SOLUTION, LTD., Seoul 07335 (KR)
(72) Inventor: JEON, Sangyoon, Daejeon 34122 (KR); PARK, Jongwook, Daejeon 34122 (KR); MIN, Jinki, Daejeon 34122 (KR); KIM, Haeun, Daejeon 34122 (KR); PANG, Yooseok, Daejeon 34122 (KR)
(74) Representative: Plasseraud IP
(86) International application number: PCT/KR2025/009918
(87) International publication number: WO 2026/014907

(57) **Abstract**

A battery module according to an exemplary embodiment of the present disclosure includes: a cell assembly including a plurality of battery cells; a lower housing that accommodates the cell assembly in its internal space; and a top plate mounted on an upper portion of the lower housing and including at least one venting hole and at least one step guide protruding outward.

## Description

### [Technical Field]

The present disclosure relates to a battery module, a battery pack including the same and a vehicle.

### [Background Art]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Types of secondary batteries currently in widespread use include lithium-ion batteries, lithium polymer batteries, nickel-cadmium batteries, nickel-metal hydride batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

Note that with the increase in electric vehicles, safety in battery modules/packs is becoming more important, and the need to suppress thermal propagation at the module level is increasing. Accordingly, when a thermal event occurs within a battery module, it is important to smoothly discharge internal venting gas and/or flame to the outside. On the other hand, the related art has a problem in that flame, debris particles, and the like discharged to the outside of the battery module flow back into the battery module, and a need to control such back flame has arisen.

### [Disclosure]

### [Technical Problem]

An object of the present disclosure is to smoothly discharge a venting gas to the outside of a battery module when a thermal event occurs within the battery module.

In addition, another object of the present disclosure is to prevent high-temperature venting gas and/or particles discharged upward from the battery module from flowing back into the battery module.

However, the technical problems to be solved by the present disclosure are not limited to those described above, and other problems not explicitly mentioned will be apparent to those skilled in the art from the following description of the disclosure.

### [Technical Solution]

To achieve the above objects, a battery module according to an exemplary embodiment of the present disclosure includes: a cell assembly including a plurality of battery cells; a lower housing configured to accommodate the cell assembly in its internal space; and a top plate mounted on an upper portion of the lower housing and including at least one venting hole and at least one step guide protruding outward.

In an aspect of the present disclosure, the plurality of battery cells may be configured to discharge venting gas through upper sealed portions.

In another aspect of the present disclosure, the top plate may include a plurality of the venting holes.

In another aspect of the present disclosure, the top plate may include a mesh in an upper portion or lower portion of the venting hole.

In an aspect of the present disclosure, the step guide may be configured to protrude from an edge of the venting hole toward the outside of the battery module.

In another aspect of the present disclosure, a terminal end portion of the step guide may have a curved shape.

In another aspect of the present disclosure, the step guide may be formed integrally with the top plate.

In an aspect of the present disclosure, the battery module may further include at least one barrier provided within the lower housing and configured to support the top plate upward.

Preferably, the barrier may be configured to block flame.

In another aspect of the present disclosure, the top plate may include a plurality of the venting holes, and the barrier may be positioned between the plurality of venting holes.

Note that the present disclosure provides a battery pack including at least one battery module according to the above-described exemplary embodiment.

Preferably, a protrusion height of the step guide may be configured to be about 40 to 60% of a distance from the top plate to an upper cover of the battery pack.

Furthermore, the present disclosure provides a vehicle including at least one battery pack according to the above-described exemplary embodiment.

### [Advantageous Effects]

According to the present disclosure, when a thermal event occurs within a battery module, venting gas can be smoothly discharged to the outside of the battery module.

In addition, according to the present disclosure, when venting gas is discharged upward from the battery module, the discharged high-temperature venting gas and/or particles can be prevented from flowing back into the battery module.

However, the effects achieved by the present disclosure are not limited to those described above, and other technical effects not explicitly mentioned will be apparent to those skilled in the art from the following description of the disclosure.

### [Description of Drawings]

The accompanying drawings illustrate preferred exemplary embodiments of the present disclosure and, together with the following description of the disclosure, serve to provide a better understanding of the technical features of the present disclosure, and thus the present disclosure should not be construed as being limited to the drawings.
FIG. 1 is a diagram illustrating a battery module according to an exemplary embodiment of the present disclosure.
FIG. 2 is a diagram illustrating a battery cell included in the battery module of FIG. 1.
FIG. 3 is a diagram illustrating a top plate according to an exemplary embodiment of the present disclosure.
FIG. 4 is a diagram illustrating a top plate according to another exemplary embodiment of the present disclosure.
FIG. 5 is a diagram illustrating a step guide according to an exemplary embodiment of the present disclosure.
FIG. 6 is a diagram illustrating a step guide according to another exemplary embodiment of the present disclosure.
FIG. 7 is a diagram illustrating a step guide according to still another exemplary embodiment of the present disclosure.
FIG. 8 is a cross-sectional view of the battery module according to an exemplary embodiment of the present disclosure.
FIG. 9 is a diagram illustrating a battery pack including the battery module according to an exemplary embodiment of the present disclosure.
FIG. 10 is a diagram illustrating a relationship between the step guide and an upper cover of the battery pack, in the battery pack according to an exemplary embodiment of the present disclosure.
FIG. 11 is a diagram illustrating a direction of movement of venting gas when a thermal event occurs within a battery module of the related art.
FIG. 12 is a diagram illustrating a direction of movement of venting gas when a thermal event occurs in a battery module according to an exemplary embodiment of the present disclosure.
FIG. 13 is a diagram illustrating a vehicle including the battery pack according to an exemplary embodiment of the present disclosure.

### [Mode for carrying out the invention]

The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the present disclosure and to allow one skilled in the art to which the present disclosure belongs to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like elements throughout the specification. When an element such as a layer, a film, a region, a plate, or the like is referred to as being "on" another element, it may be "directly on" another element or an intervening element may also be present. Conversely, when an element is referred to as being "directly on" another element, it may mean that there is no intervening element present. In addition, when an element such as a layer, a film, a region, a plate, or the like is referred to as being "below" another element, it may be "directly below" another element or an intervening element may also be present. Conversely, when an element is referred to as being "directly below" another element, it may mean that there is no intervening element present.

An expression that two comparative targets are the same means that they are 'substantially the same'. Accordingly, 'substantially the same' may encompass a deviation of, for example, up to 5%, which is regarded as a low level in the art. In addition, a uniform parameter in a predetermined region may refer to uniform from the average point of view.

Throughout the specification, unless otherwise stated, each element may be interpreted as being in the singular or plural form.

When a component is described as being arranged "above (or below)" or "on (or under") another component, it is to be understood that the component may be arranged in contact with an upper surface (or a lower surface) of another component, or an additional component may be interposed between the two components.

Additionally, when a component is described as being "connected", "coupled", or "joined" to another component, it is to be understood that the components may be directly connected or coupled to each other, but the components may be indirectly "connected", "coupled", or "joined" via an additional component interposed therebetween.

Throughout the specification, the description "A and/or B" refers to A, B, or A and B, unless otherwise stated, and the description "C to D" means C or more and D or less, unless otherwise stated.

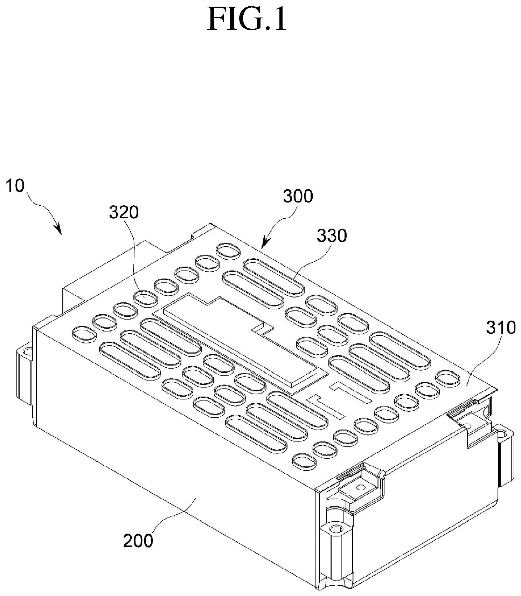

FIG. 1 is a diagram illustrating a battery module 10 according to an exemplary embodiment of the present disclosure.

Referring to FIG. 1, the battery module 10 according to an exemplary embodiment of the present disclosure includes a cell assembly 100, a lower housing 200, and a top plate 300. The battery module 10 may further include a barrier 400.

The cell assembly 100 may include a plurality of battery cells 110. The plurality of battery cells 110 may be stacked in at least one direction. More specifically, the plurality of battery cells 110 may be arranged at least in a horizontal direction. The plurality of battery cells 110 may be configured to be aligned side by side in a left-and-right direction in a state of being erected in an up-and-down direction. Below, each of the battery cells 110 will be described in more detail.

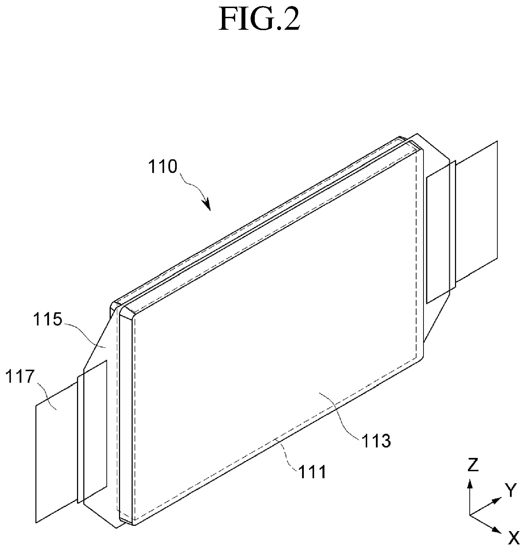

FIG. 2 is a diagram illustrating the battery cell 110 included in the battery module 10 of FIG. 1.

Referring to FIG. 2, the battery cell 110 may be a secondary battery, and may be, for example, a pouch-type battery cell 110. However, the type of battery cell 110 is not limited thereto. For example, other types of battery cells 110, such as cylindrical cells or prismatic cells, may also be employed in the battery module 10 of the present disclosure.

Hereinafter, an example will be described in which the battery cell 110 is a pouch-type cell, as illustrated in FIG. 2. Referring to FIG. 2, the battery cell 110 may include an electrode assembly 111, a receiving portion 113 that accommodates the electrode assembly 111, a sealing portion 115 formed at a periphery of the receiving portion 113, and a pair of electrode leads 117 connected to the electrode assembly 111 and extending outward from the sealing portion 115.

The pair of electrode leads 117 may be coupled with electrode tabs (not illustrated) provided on the electrode assembly 111 and pulled out to the outside of the sealing portion 115 through the sealing portion 115. The pair of electrode leads 117 may each have a shape extending along a longitudinal direction of the battery cell 110. The pair of electrode leads 117 may be pulled out in the same direction or in opposite directions.

Referring to FIG. 2, the battery cell 110 may be configured to discharge venting gas through the upper sealing portion 115. The sealing portion 115 may be provided with a venting portion formed in order to prevent an increase in internal pressure due to gas generated within the battery cell 110. The venting portion corresponds to a region that is formed on a part of the sealing portion 115 and is structurally weaker than a surrounding region so as to be easily ruptured when internal pressure is applied. The venting portion may be, for example, a region where sealing is formed weaker than in the surrounding region. In this case, the venting portion may be formed on one of both side edges of the sealing portion 115. In particular, the venting portion may be formed on an upper edge of both side edges of the sealing portion 115.

According to this structure, gas generated within the battery cell 110 can be discharged to the outside of the battery cell 110 through the venting portion formed at the upper end portion of the battery cell 110. Accordingly, the gas can be discharged to the outside of the battery module 10 through venting holes 320 of a top plate 300 located on an upper end side of the battery cell 110. That is, according to this structure, high-temperature gas and flame within the module can be smoothly discharged to the outside of the battery module 10.

In an aspect of the present disclosure, the lower housing 200 may accommodate the cell assembly 100 in its internal space.

Referring to FIG. 1, the lower housing 200 has an internal empty space formed therein, and can accommodate the cell assembly 100 in the internal space. For example, the lower housing 200 may include a U-shaped frame formed in a U shape to surround lower, left, and right sides of the cell assembly 100, and end frames that seal front and rear open ends of the U-shaped frame.

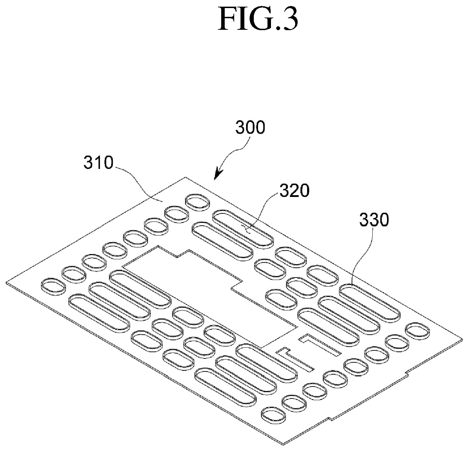

FIG. 3 is a diagram illustrating a top plate 300 according to an exemplary embodiment of the present disclosure.

In another aspect of the present disclosure, the battery module 10 includes the top plate 300. The top plate 300 may include a main body portion 310, a venting hole 320, and a step guide 330.

Referring to FIGS. 1 and 3, the top plate 300 may be configured to be mounted on an upper portion of the lower housing 200. That is, the top plate 300 may be configured to have a plate shape extending approximately in a horizontal direction. That is, the main body portion 310 may be configured to have a plate shape extending approximately in the horizontal direction. In this case, at least a portion of an edge of the top plate 300 may be coupled with an upper end of the U-shaped frame of the lower housing 200.

The top plate 300 may include at least one venting hole 320. The venting hole 320 may be formed to penetrate the lower housing 200 in a thickness direction in order to connect the internal space of the lower housing 200 and an external space. The venting hole 320 may be formed on an upper portion side of the lower housing 200. Preferably, the top plate 300 may include a plurality of venting holes 320. The venting hole 320 may extend along the longitudinal direction of the battery module 10 or along the longitudinal direction of the battery cell 110 in the form of a long hole.

The sealing portion 115, i.e., the venting portion, of the battery cell 110 may be positioned below the venting hole 320. For example, when the battery cell 110 is a pouch-type cell, the sealing portion 115 has a shape that is elongated in the longitudinal direction. Therefore, when gas is generated in the battery cell 110 and discharged from the sealing portion 115, the gas is discharged to the outside along the sealing portion 115 extending in the longitudinal direction. Therefore, in this case, the venting hole 320 may also be configured to have a shape that is elongated in the longitudinal direction.

According to this structure, the gas discharged through the upper sealing portion 115 of the battery cell 110 can be discharged to the outside of the battery module 10 through the venting hole 320 formed on the upper portion side of the lower housing 200. That is, with this structure, high-temperature gas and flame within the module can be discharged smoothly.

In addition, with this structure, even when a large amount of gas is generated in the battery module 10, the gas can be smoothly discharged to the outside of the battery module 10 through the plurality of venting holes 320. In addition, according to the structure in which the venting hole 320 is formed along the sealing portion 115 of the battery cell 110, the gas discharged from the sealing portion 115 of the battery cell 110 can be discharged directly to the outside through the venting hole 320. That is, the time during which the venting gas remains in the lower housing 200 can be minimized.

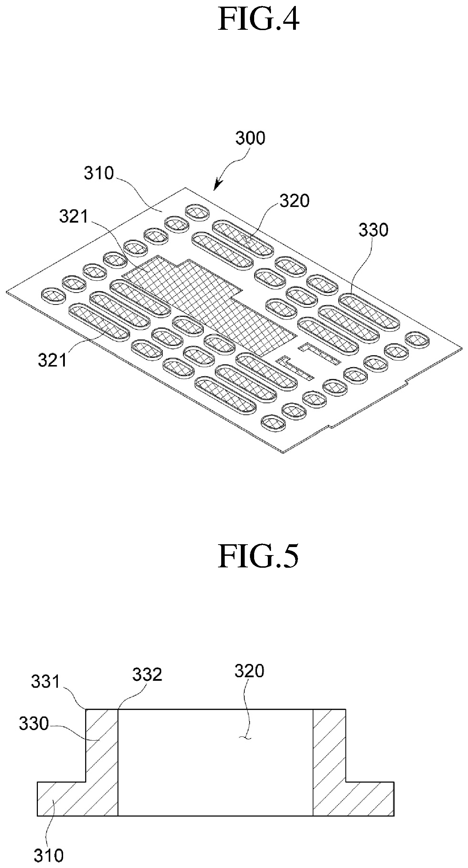

FIG. 4 is a diagram illustrating a top plate 300 according to another exemplary embodiment of the present disclosure.

**In** another aspect of the present disclosure, referring to FIG. 4, the venting hole 320 may include a mesh 321. For example, the mesh 321 may be provided in an upper or lower portion of the venting hole 320. The mesh 321 may include a metal material. The mesh 321 may be made of a fire-resistant material that can withstand high-temperature heat or flame, such as mica, or may partially include such a material.

With this structure, the mesh 321 can prevent sparks generated from the cell assembly 100 from splashing to the outside of the cell assembly 100. Additionally, it is possible to prevent fire propagation to other regions adjacent to a region within the battery module 10 where a thermal event has occurred.

FIG. 5 is a diagram illustrating a step guide 330 according to an exemplary embodiment of the present disclosure.

Referring to FIG. 5, in an aspect of the present disclosure, the top plate 300 may include at least one step guide 330 protruding outward. For example, the step guide 330 may be configured to protrude upward from the battery module 10.

More specifically, the top plate 300 may include the step guide 330 at a position corresponding to the venting hole 320. The step guide 330 may be configured to protrude from an edge of the venting hole 320 toward the outside of the battery module 10. More specifically, the step guide 330 may be configured to protrude upward from the edge of the venting hole 320. That is, the step guide 330 may protrude in a vertical direction from the top plate 300. The step guide 330 may be formed along the entire edge of the venting hole 320.

The shape of the step guide 330 may be configured to match, for example, to correspond to the venting hole 320 in position, size, shape, and the like. Therefore, the step guide 330 may be configured to have a pipe shape that is elongated in the longitudinal direction. That is, since the venting hole 320 has a structure extending in the longitudinal direction with a predetermined radius of curvature at both ends in the longitudinal direction, the step guide 330 protruding upward from the edge of the venting hole 320 may also be configured to have a pipe shape extending in the longitudinal direction with a predetermined radius of curvature at both ends in the longitudinal direction.

According to this structure, the step guide 330 protruding outward serves as a guide for the venting gas. Therefore, the gas discharged through the upper sealing portion 115 of the battery cell 110 can be effectively prevented from flowing back into the venting hole 320 or an adjacent venting hole 320 after being discharged to the outside of the battery module 10 through the venting portion.

Additionally, the strong circulating flow of high-temperature venting gas and particles generated in some battery cells 110 may be blocked by the protruding shape of the step guide 330. That is, according to the present disclosure, the protruding shape of the step guide 330 can prevent back flame toward an adjacent venting hole 320. In addition, the configuration in which the step guide 330 is provided around each venting hole 320 can minimize the influence on adjacent battery cells 110 by isolating each venting hole 320. Accordingly, the heat, which is applied to the top plate 300 by the high-temperature venting gas and particles discharged through the step guide 330, can be minimized, and thus the shape of the venting hole 320 can be stably maintained.

In addition, according to the above configuration, the provision of the step guide 330 on the top plate 300 allows smooth venting, thereby delaying thermal runaway. That is, according to the present disclosure, the thermal propagation within the battery module 10 can be delayed.

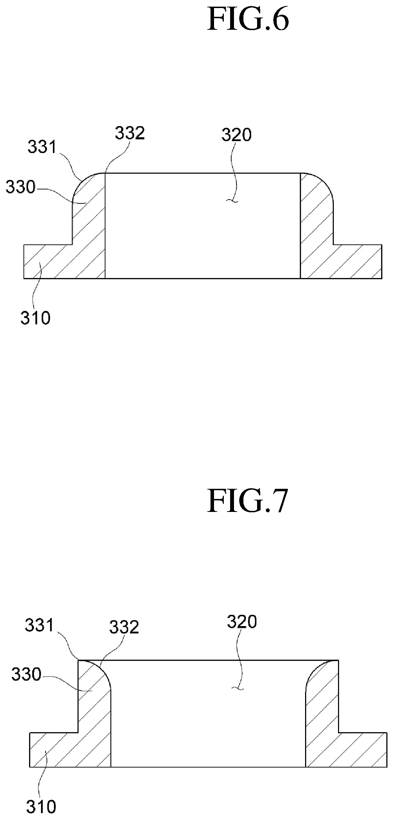

FIG. 6 is a diagram illustrating a step guide 330 according to another exemplary embodiment of the present disclosure.

Referring to FIG. 6, a terminal end portion of the step guide 330 may have a curved shape. The terminal end portion of the step guide 330 may have a chamfered shape. For example, a chamfered shape may be applied to an outer edge 331 of the terminal end portion of the step guide 330. That is, the outer edge 331 of the terminal end portion of the step guide 330 may be configured to have a round shape. The outer edge 331 of the terminal end portion of the step guide 330 may be configured to have a curved shape. In this case, the outer edge 331 of the terminal end portion of the step guide 330 may be configured to have a predetermined radius of curvature.

For example, if the outer edge 331 of the terminal end portion of the step guide 330 has an angled shape, when the venting gas discharged from the step guide 330 to the outside comes into contact with an adjacent venting hole 320, it contacts the angled shape. Accordingly, the venting gas may swirl around the angled edge and flow into the interior of the venting hole 320.

On the other hand, according to the above structure of the present disclosure, when the venting gas discharged from the step guide 330 to the outside comes into contact with an adjacent venting hole 320, it contacts the curved shape of the outer edge 331 as described above. Accordingly, the likelihood that the venting gas will proceed in the horizontal direction along the curved shape increases. Therefore, according to the present disclosure, the venting gas discharged to the outside of the battery module 10 can be effectively prevented from flowing back into the battery module 10.

FIG. 7 is a diagram illustrating a step guide 330 according to still another exemplary embodiment of the present disclosure.

Referring to FIG. 7, a terminal end portion of the step guide 330 may have a curved shape. The terminal end portion of the step guide 330 may have a chamfered shape. For example, a chamfered shape may be applied to an inner edge 332 of the terminal end portion of the step guide 330. That is, the inner edge 332 of the terminal end portion of the step guide 330 may be configured to have a round shape. The inner edge 332 of the terminal end portion of the step guide 330 may be configured to have a curved shape. In this case, the inner edge 332 of the terminal end portion of the step guide 330 may be configured to have a predetermined radius of curvature.

For example, if the inner edge 332 of the terminal end portion of the step guide 330 has an angled shape, when the venting gas is discharged from the step guide 330, the venting gas and/or debris particles are guided upward. In this case, if the venting gas and/or particles come into contact with the upper cover 52 of the battery pack 3 located above the battery module 10, the venting gas and/or particles may flow back into the venting hole 320.

On the other hand, according to the above structure of the present disclosure, when the venting gas is discharged from the step guide 330 to the outside, it contacts the curved shape as described above. Accordingly, the likelihood that the venting gas will proceed in the horizontal direction along the curved shape of the inner edge 332 increases. That is, according to the above configuration, when the venting gas is discharged, the venting gas can be guided to flow in a horizontal direction rather than in a vertical direction. Therefore, according to the present disclosure, the venting gas discharged to the outside of the battery module 10 can be effectively prevented from flowing back into the battery module 10.

In an aspect of the present disclosure, the step guide 330 may be formed integrally with the top plate 300.

For example, the top plate 300 may include a plastic material, and the step guide 330 may also include a plastic material by being formed integrally. For example, the step guide 330 may be formed by injection molding when manufacturing the top plate 300.

Alternatively, as another exemplary embodiment, the step guide 330 may be coupled to the top plate 300. For example, the step guide 330 may be coupled onto the top plate 300 by thermal fusion.

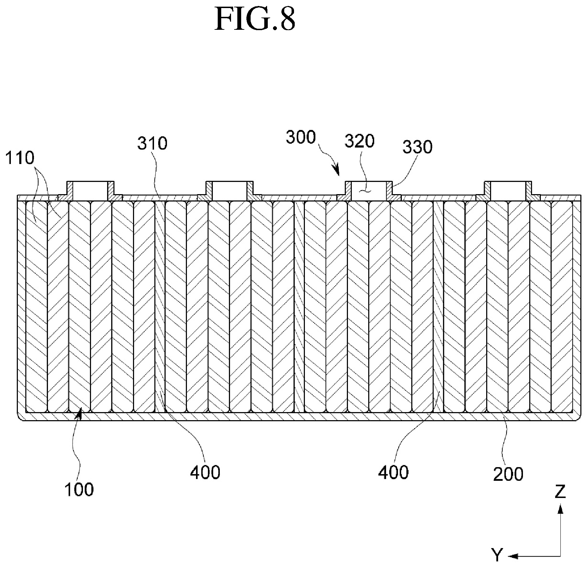

FIG. 8 is a cross-sectional view of the battery module 10 according to an exemplary embodiment of the present disclosure.

Referring to FIG. 8, the battery module 10 may further include at least one barrier 400.

The barrier 400 may be provided within the lower housing 200. The barrier 400 may be configured to support the top plate 300 upward. The barrier 400 may be aligned in a direction parallel to the battery cell 110. When the battery cell 110 is a pouch-type cell, the pouch-type cell may be mounted such that a receiving portion having a substantially planar shape is oriented vertically from the ground. In this case, the barrier 400 may also be mounted in a direction parallel to the receiving portion of the pouch-type cell. For example, the barrier 400 may be provided in plurality within the lower housing 200, and in this case, the plurality of barriers 400 may be provided in parallel with each other at predetermined intervals from each other. That is, the barrier 400 may be interposed between adjacent battery cells 110. For example, the barrier 400 may be interposed between at least some of the battery cells 110 among the plurality of battery cells 110 stacked in the left-and-right direction. Furthermore, the barrier 400 may be provided in plurality, and the barriers may be arranged to be spaced apart from each other in the stacking direction of the battery cells 110. The barrier 400 may be interposed between different battery cells 110. As a more specific example, for every three or four battery cells 110, one barrier 400 may be arranged. In this case, it can be said that three or four battery cells 110 are located between two barriers 400 that are adjacent to each other but spaced apart from each other. That is, the barrier 400 may serve to divide the interior space of the lower housing 200 into a plurality of zones.

Note that the barrier 400 may be configured to block flame. For example, the barrier 400 may be made of a flame-retardant material or a heat-resistant material with high flame resistance, so as to prevent or reduce flame propagation between adjacent battery cells 110. For example, the barrier 400 may be made of a metal material such as SUS (stainless steel). Alternatively, the barrier 400 may include at least one material of GFRP (Glass Fiber Reinforced Plastic) and CFRP (Carbon Fiber Reinforced Plastic). In addition, the barrier 400 may be formed of a metal material such as aluminum or an alloy including such a metal material.

With this configuration, effective flame blocking performance can be achieved. That is, the barrier 400 divides the interior space of the lower housing 200 in this way, so that even when a thermal event occurs in some battery cells 110, the barrier 400 can effectively prevent the propagation of flame or heat to other battery cells 11. In addition, in this case, the structural strength of the blocking member can be improved, and it may be advantageous in reducing the manufacturing cost or the weight of the battery module 10. In addition, for the barrier 400, various flame blocking materials known at the time of application of the present disclosure, such as ceramic materials, can be employed.

According to this configuration of the present disclosure, when a thermal event such as thermal runaway intensifies and flame or the like is generated, the propagation of flame between the cells can be prevented. Therefore, the spread of fire to the entire battery module 10 due to the propagation of flame between the battery cells 110 can be suppressed, or the rate of such spread can be delayed.

Referring again to FIG. 8, in an aspect of the present disclosure, the top plate 300 may include a plurality of venting holes 320, and the barriers 400 may be positioned between the plurality of venting holes 320.

That is, the barriers 400 partition the interior space of the lower housing 200 into a plurality of zones, and in this case, at least one venting hole 320 may be provided for each zone. In this case, the spaces within the lower housing 200 partitioned by the barriers 400 is referred to as a first space, a second space, a third space, ... , and an n-th space. In this case, when a thermal event occurs in a battery cell 110 included in the first space, venting gas is generated within the first space. The venting gas may be discharged to the outside through the venting hole 320 located above the first space. That is, the venting gas is quickly discharged to the outside through the venting hole 320, the propagation of heat within the first space to the second space, the third space, and the like can be effectively prevented. The venting holes 320 may be arranged to be in a one-to-one correspondence with the spaces partitioned by the barriers 400.

In addition, a step guide 330 protruding outward may be provided on the edge of the venting hole 320. Accordingly, the venting gas discharged to the outside through the venting hole 320 located above the first space is guided upward by the step guide 330, so that the possibility of the venting gas flowing into an adjacent venting hole 320 is significantly reduced.

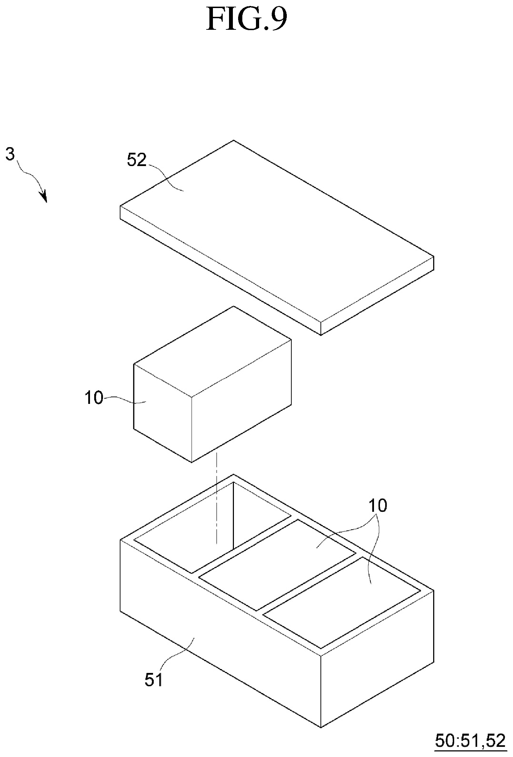

FIG. 9 is a diagram illustrating a battery pack 3 including the battery module 10 according to an exemplary embodiment of the present disclosure.

Referring to FIG. 9, the battery pack 3 according to an exemplary embodiment of the present disclosure may include at least one battery module 10 according to an exemplary embodiment of the present disclosure described above. In addition, the battery pack 3 according to an exemplary embodiment of the present disclosure may include a pack case 50 capable of accommodating at least one battery module 10. In this case, the pack case 50 may include a lower case 51 and an upper cover 52. The upper cover 52 may be located to be spaced apart from the top plate 300 of the battery module 10 accommodated inside the battery pack 3 by a predetermined distance in order to ensure smooth movement of venting gas.

Furthermore, in addition to the battery module 10, various other components, such as components of the battery pack 3 known at the time of application of the present disclosure, such as a BMS, a pack case, a relay, and a current sensor, may be further included.

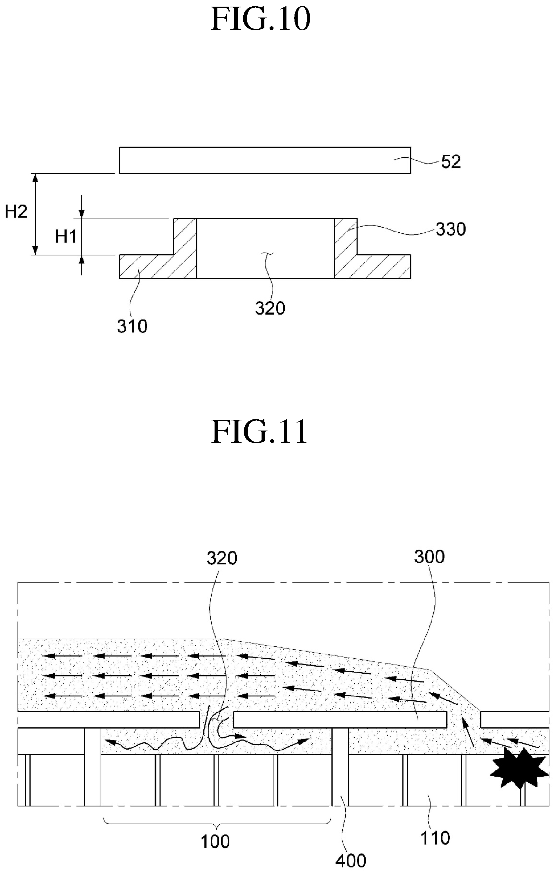

FIG. 10 is a diagram illustrating a relationship between the step guide 330 and the upper cover 52 of the battery pack 3, in the battery pack 3 according to an exemplary embodiment of the present disclosure.

Referring to FIG. 10, a protrusion height H1 of the step guide 330 may be configured to be about 40 to 60% of a distance H2 from the top plate 300 to the upper cover 52 of the battery pack 3. Preferably, the protrusion height H1 of the step guide 330 may be configured to be about 50% of the distance H2 from the top plate 300 to the upper cover 52 of the battery pack 3.

With this structure, the distance between the upper cover 52 of the battery pack 3 and the top plate 300 of the battery module 10 is appropriately secured, so that flame within the battery module 10 can be smoothly discharged. In addition, at the same time, it is possible to effectively prevent flame from flowing back into the adjacent venting hole 320. That is, according to the present disclosure, the thermal propagation within the battery module 10 can be delayed. In addition, according to the above configuration, the safety of the battery module 10 unit can be improved by preventing inflow of back flame. Furthermore, according to the above configuration, the shape of the venting hole 320 provided in the top plate 300 can be stably maintained. Accordingly, sequential fire events, rather than simultaneous fire events, of the battery cells 110 can be induced, and smooth venting can be induced.

FIG. 11 is a diagram illustrating a direction of movement of venting gas when a thermal event occurs within a battery module 10 of the related art.

Referring to FIG. 11, in the battery module 10 of the related art, a venting hole 320 for upward venting is provided in a top plate 300 having a substantially planar shape, so that flame, gas and/or particles generated in a battery cell 110 where a thermal event has occurred are discharged to the outside of the battery module 10 through the venting hole 320. However, since a separate step guide 330 is not provided, the flame and/or gas flow horizontally along the extended plane of a main body portion 310 of the top plate 300. Accordingly, there is a problem in that the shape of the venting hole 320 collapses due to high-temperature gas and particles sweeping across the upper surface of the top plate 300.

In this case, as a circulating flow of flame occurs at the inlet of the venting hole 320 of the top plate 300, back flame in which the flame discharged upward flows back into an adjacent venting hole 320 may occur, thereby exposing the adjacent battery cell 110 to the flame. That is, the flame flows along the main body portion 310 of the top plate 300, and due to the inlet structure of the venting hole 320, the circulating flow occurs, resulting in back flame in which the flame discharged to the outside of the battery module 10 flows back into an adjacent venting hole 320. Due to the back flame, simultaneous ignitions occur rather than sequential ignitions, and as a result, the heat propagation delay effect in the battery module 10 of the related art is insufficient. Additionally, there is a problem in that the likelihood of simultaneous ignitions increases without separation between zones within the battery module 10.

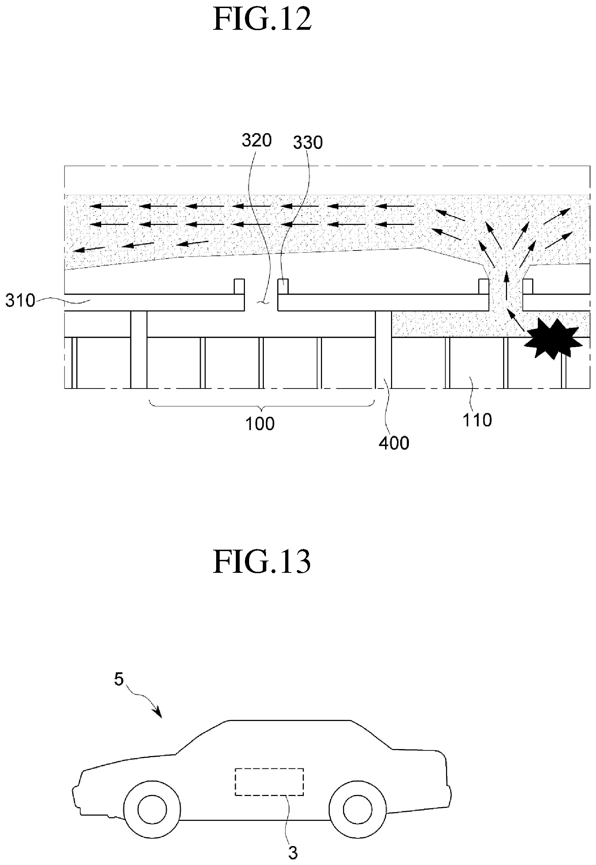

FIG. 12 is a diagram illustrating a direction of movement of venting gas when a thermal event occurs in the battery module 10 according to an exemplary embodiment of the present disclosure.

Referring to FIG. 12, when a thermal event occurs in some zones among a plurality of zones within the battery module 10 partitioned by the barriers 400, flame, gas and/or particles generated in the battery cell 110 where the thermal event has occurred are discharged to the outside of the battery module 10 through the venting hole 320. In this case, according to the present disclosure in which the step guide 330 is provided around the venting hole 320 of the top plate 300, the flame and/or gas is guided by the inner surface of the step guide 330 protruding upward, and can be thus discharged upward. That is, the flame and/or gas are discharged to the outside while being spaced apart from the main body portion 310 of the top plate 300 by a predetermined distance.

Therefore, according to the above structure, the flame and/or gas flows in a substantially horizontal direction while being spaced apart from the extended plane of the main body portion 310 of the top plate 300. Accordingly, the high-temperature gas and particles do not come into direct contact with the upper surface of the top plate 300, so that the heat applied to the top plate 300 is relatively reduced, and thus the shape of the venting hole 320 can be prevented from collapsing.

In addition, according to the above structure, since the flame and/or gas flows in the substantially horizontal direction while being spaced apart from the extended plane of the main body portion 310 of the top plate 300, smooth upper venting can be maintained while suppressing back flame toward the adjacent venting hole 320. That is, according to the above configuration, when venting gas and flame are discharged from some zones among the plurality of zones within the battery module 10 partitioned by the barriers 400, the gas and flame can be suppressed from flowing back into other adjacent zones. Accordingly, the heat propagation delay effect in the battery module 10 can be maximized by inducing sequential fire rather than simultaneous fire of the battery cells 110. That is, among the zones within the battery module 10 partitioned by the barriers 400, a zone adjacent to the zone where the thermal runaway event has occurred is protected by the step guide 330 such that high-temperature gas and flame generated from the zone where the thermal runaway event has occurred do not flow back into the adjacent zone. As a result, the chain reaction event can be controlled, and the safety of the battery module 10 can be ensured. The step guide 330 serves as a discharge path for internal gas and flame in a zone including a battery cell 110 where a thermal runaway event has occurred, but can block flame and gas transferred from the zone where the thermal runaway event has occurred from flowing back into a zone adjacent to the zone where the thermal runaway event has occurred.

Furthermore, according to the present disclosure, explosion, rupture or collapse of the lower housing 200 due to an increase in internal pressure of the battery module 10 can be effectively prevented. Accordingly, the structure of the lower housing 200 can be stably maintained, so that explosion or structural collapse of the battery module 10 in which a thermal runaway event has occurred during the event progression may not occur.

FIG. 13 is a diagram illustrating a vehicle 5 including the battery pack 3 according to an exemplary embodiment of the present disclosure.

Referring to FIG. 13, the vehicle 5 according to an exemplary embodiment of the present disclosure may include at least one battery pack 3 according to an exemplary embodiment of the present disclosure.

The battery module 10 according to an exemplary embodiment of the present disclosure may be applied to the vehicle 5, such as an electric vehicle 5 or a hybrid electric vehicle 5. That is, the vehicle 5 according to an exemplary embodiment of the present disclosure may include the battery module 10 according to an exemplary embodiment of the present disclosure or the battery pack 3 according to an exemplary embodiment of the present disclosure. In addition, the vehicle 5 according to an exemplary embodiment of the present disclosure may further include various other components included in the vehicle 5, in addition to the battery module 10 or the battery pack 3. For example, the vehicle 5 according to an exemplary embodiment of the present disclosure may further include a body, a motor, a control device such as an ECU (electronic control unit), and the like, in addition to the battery module 10 according to an exemplary embodiment of the present disclosure.

According to various exemplary embodiments as described above, the safety of the battery module 10 can be improved. That is, according to an aspect of the present disclosure, in a thermal event situation, high-temperature gas and flame within a zone within a module where a thermal event has occurred can be smoothly discharged while preventing structural collapse of the lower housing 200. Additionally, the high-temperature gas and flame generated from the event zone can be prevented from flowing back into a zone adjacent to the event zone within the module. Therefore, the chain reaction of thermal events of the battery module 10 can be controlled, and thus the safety of the battery module 10 can be improved. Accordingly, according to various exemplary embodiments as described above, the battery module 10 with improved stability, and the battery pack 3 and the vehicle 5 including the same can be provided.

Note that although the terms indicating directions such as upper and lower are used herein, these terms are used only for convenience of description, and it is apparent to one skilled in the art that these terms may change depending on the position of the target object or the position of the observer.

Although the present disclosure has been described with reference to the limited exemplary embodiments and drawings, the present disclosure is not limited thereto, and a variety of modifications and variations can be made within the technical spirit of the present disclosure and the equivalent range of the claims described below by one skilled in the art to which the present disclosure belongs.

### [Industrial Applicability]

The present disclosure can provide a battery module capable of smoothly discharging venting gas to the outside of the battery module when a thermal event occurs.

## Claims

1. A battery module comprising:
a cell assembly comprising a plurality of battery cells;
a lower housing configured to accommodate the cell assembly in its internal space; and
a top plate mounted on an upper portion of the lower housing and comprising at least one venting hole and at least one step guide protruding outward.

2. The battery module of claim 1, wherein the plurality of battery cells are configured to discharge venting gas through upper sealed portions.

3. The battery module of claim 1, wherein the top plate comprises a plurality of the venting holes.

4. The battery module of claim 1, wherein the top plate comprises a mesh in an upper portion or lower portion of the venting hole.

5. The battery module of claim 1, wherein the step guide is configured to protrude from an edge of the venting hole toward the outside of the battery module.

6. The battery module of claim 1, wherein a terminal end portion of the step guide has a curved shape.

7. The battery module of claim 1, wherein the step guide is formed integrally with the top plate.

8. The battery module of claim 1, further comprising at least one barrier provided within the lower housing and configured to support the top plate upward.

9. The battery module of claim 8, wherein the barrier is configured to block flame.

10. The battery module of claim 8, wherein
the top plate comprises a plurality of the venting holes, and
the barrier is positioned between the plurality of venting holes.

11. A battery pack comprising at least one battery module of any one of claims 1 to 10.

12. The battery pack of claim 11, wherein a protrusion height of the step guide is configured to be 40 to 60% of a distance from the top plate to an upper cover of the battery pack.

13. A vehicle comprising at least one battery pack of claim 11.
